# EUROPEAN PATENT APPLICATION

(11) **EP 4 624 345 A1**
(43) Date of publication of application: **01.10.2025**
(21) Application number: 24167406.8
(22) Date of filing: 28.03.2024
(51) Int. Cl.: B64U 50/15, B64U 70/83, B64D 5/00, B64D 7/00, B64U 70/50, F42B 12/70, F41G 7/22, G01S 13/88, G05D 1/683, G05D 1/686

(54) **UNMANNED AERIAL VEHICLE**

(71) Applicant: BAE SYSTEMS plc, London SW1Y 5AD (GB)
(72) Inventor: HOLLIDAY,Gareth Alun, Surrey GU16 7EX (GB)
(74) Representative: BAE SYSTEMS plc Group IP Department

(57) **Abstract**

The present invention relates to an unmanned aerial vehicle (UAV) which comprises a controller, propulsion means, and a power or fuel supply for the propulsion means. The controller is configured to receive location data relating to a target aircraft, steer the UAV towards the target aircraft, and upon reaching a first predetermined distance R₀ from the target aircraft, follow the target aircraft while maintaining a distance from the target aircraft between a maximum predetermined distance Rₘₐₓ and a minimum predetermined distance Rₘᵢₙ from the target aircraft.

## Description

### FIELD

The present invention relates to an unmanned aerial vehicle (UAV), and in particular, to a UAV configured to approach and follow a moving target.

### BACKGROUND

Modern aircraft, in particular military aircraft, are often equipped with tools and systems to detect and address the threat of incoming anti-aircraft missiles. A missile approach warning system (MAW) employs sensors to detect incoming missiles, and automatically warns the pilot to make a defensive manoeuvers in an effort to "shake off" an incoming missile, and/or deploy any available countermeasures to disrupt missile tracking. The MAW system may detect the radar signature of an incoming missile, active homing radar signals from a missile, or the thermal signature of an incoming missile. The deployable countermeasures, such as chaff and flares, disguise the heat or radar signature of the aircraft and with the intention of confusing the guidance system of a missile. Towed decoys may also be deployed in an attempt to trick a missile into tracking the wrong target. However, only a limited number of such countermeasures can be carried on-board any given aircraft, and once they are fully expended, the aircraft is vulnerable to any subsequent attack, e.g. a second "follow-up" anti-aircraft missile. Ever-improving missile defence systems and countermeasures have reduced the launch-to-success ratio of anti-aircraft missiles, and subsequently increased the cost of a successful missile strike by requiring a greater number of missiles to be launched in order to achieve a successful strike.

The present invention attempts to improve the efficiency and success rate of anti-aircraft missiles.

### SUMMARY

According to an aspect of the present invention, there is provided an unmanned aerial vehicle (UAV) comprising a controller, propulsion means and a power or fuel supply for the propulsion means. The controller is configured to receive location data relating to a target aircraft, and steer the UAV towards the target aircraft. Upon reaching a first predetermined distance R₀ from the target aircraft, the controller steers the UAV to follow the target aircraft while maintaining a distance from the target aircraft between a maximum predetermined distance Rₘₐₓ and a minimum predetermined distance Rₘᵢₙ from the target aircraft. The UAV can be deployed in order to deplete a target's countermeasures, or distract the pilot. Furthermore, the UAV can be used for training pilots how to react to anti-aircraft missile launches.

In one example, the UAV comprises a location transponder configured to transmit a signal indicating the location of the UAV, thus assisting in the recovery of the UAV after use.

In one example, the power or fuel supply is refillable/rechargeable so that the UAV can be refuelled/recharged, and used again.

In one example, the controller is configured to identify a direction of flight of the target aircraft, calculate a flight path for the UAV so as to approach and follow the target aircraft from behind, and control the UAV to fly along the calculated flight path. This assists in the UAV being able to pursue the target aircraft, instead of over-shooting and having to recalculate an approach path.

In one example, the controller is configured to steer the UAV so as to maintain a predetermined polar angle relative to the longitudinal axis of the direction of flight of the target aircraft. This helps keep the UAV behind the target aircraft, and assists the UAV to pursue the target aircraft for longer.

The controller may receive location data from at least one tracking sensor either on-board and/or off-board the UAV. Preferably, the at least one tracking sensor is one of an active radar, a semi-active radar, a passive radar, thermal imaging apparatus, and visual imaging apparatus. This allows the UAV to better mimic a real anti-aircraft missile.

In one example, the UAV comprise comprising controlled descent means. This may include at least one of a landing gear arrangement, a parachute, a retro-rocket, an autorotation means, buoyancy means, and/or an inflatable airbag. This allows he UAV to be recovered and reused again after launch. Preferably, the controller is adapted to calculate the remaining range of the UAV, calculate the distance to the nearest designated landing zone, and initiate a controlled descent towards the nearest designated landing zone once the range of the UAV falls to the distance to the nearest designated landing zone. This assists in the recovery of the UAV. Optionally, the controller is adapted to initiate a controlled descent upon receiving a wireless signal.

In a preferred example, the propulsion means is a rocket or jet engine. This assists the UAV in approaching and pursuing a fast jet target aircraft, and for better mimicking the thermal signature of an anti-aircraft missile.

There is also provided a method of launching and controlling an unmanned aerial vehicle (UAV). The method comprises launching a UAV, controlling the UAV to approach a target aircraft, and (upon reaching a first predetermined distance R₀ from the target aircraft) controlling the UAV to follow the target aircraft while maintaining a distance from the target aircraft between a maximum predetermined distance Rₘₐₓ and a minimum predetermined distance Rₘᵢₙ from the target aircraft. Preferably, the method also comprises initiating a controlled descent of the UAV.

### BRIEF DESCRIPTION OF THE FIGURES

Embodiments of the invention will now be described by way of example only with reference to the figures, in which:
Figure 1 shows an example UAV according to the present invention;
Figure 2 shows as example scenario featuring a target aircraft in a designated airspace;
Figure 3 shows an example UAV approaching a target aircraft;
Figure 4 shows an example UAV following a target aircraft;
Figure 5a-5c show examples of controlled descent means; and
Figure 6 shows an example method according to the invention.

### DETAILED DESCRIPTION

The present invention provides an apparatus and method for pursuing a moving target in an effort to force the target to expend its limited countermeasure resources, and in addition, to act as a decoy and/or distract the pilot or controller of the target. It may also be used as a training tool for pilots to simulate an incoming anti-aircraft missile. While the examples discussed herein primarily describe approaching and following a target aircraft, it will be appreciated by the skilled person that the present invention may also be suitable for any moving air, land or water vehicle.

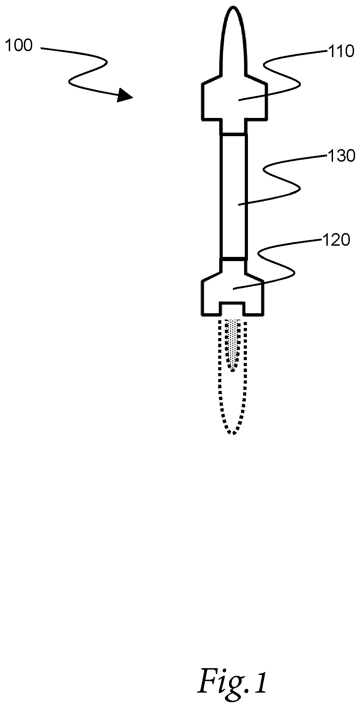

Figure 1 show an example unmanned aerial vehicle (UAV) 100 according the present invention. The UAV comprises a controller 110, propulsion means 120, and a power or fuel supply 130 for providing power or fuel to the propulsion means 120. The UAV 100 may further comprise control surfaces (e.g. ailerons, flaps, rudders) or directional propulsion means so as to guide/steer the UAV 100 towards the target.

The UAV 100 may comprise any suitable propulsion means 120, including (but not limited to) a rocket motor, a jet engine, a ramjet, a turboprop, a horizontal propeller, a pivoting propeller, a vertical propeller and/or a single or multiple rotor blades. In a preferred example, the propulsion means 120 is a rocket motor or jet engine, which is particularly favourable where the target aircraft is, for example, a fighter jet aircraft. Rocket or jet propulsion can propel UAVs or the like to speeds up in excess of Mach 1, and thus rocket or jet propulsion means 120 may provide the UAV 100 with the ability to close-in and reliably pursue a fighter jet aircraft. Furthermore, the UAV 100 having rocket or jet propulsion means 120 will more closely mimic the thermal signature of a real anti-aircraft missile, and is thus more likely to trigger the missile approach warning system of a target aircraft 10.

The power or fuel supply 130 may comprise any suitable power source or fuel for the given propulsion means 120, including (but not limited to) combustible fuels, solid propellants, fuel cells, or electrical power storage, e.g. batteries.

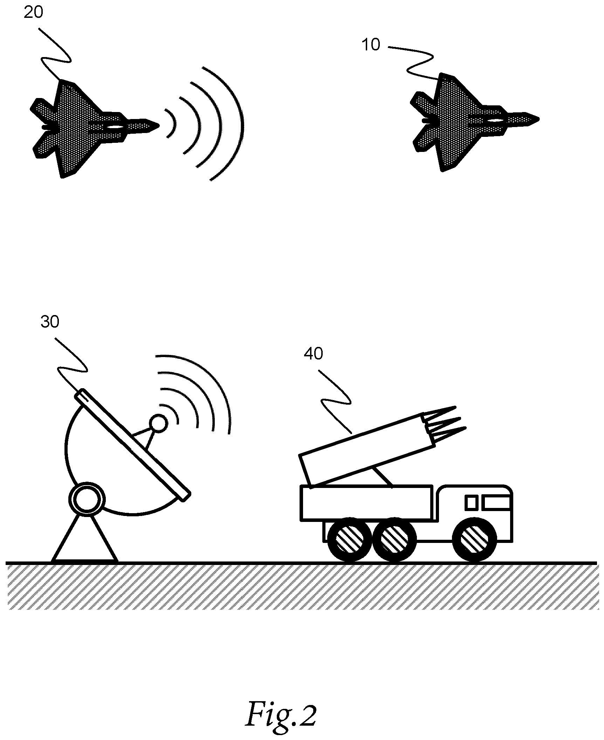

Referring to Figure 2, there is shown a target "hostile" aircraft 10 being pursued by a "friendly" aircraft 20. The target aircraft 10 may be detected, identified tracked by a ground-based radar system 30, and/or by the target tracking systems on-board the friendly aircraft 20.

The UAV 100 may be launched in-air from the friendly aircraft 20, or from a ground-based launch platform 40 (e.g. a static or mobile surface-to-air launch platform). It will be appreciated by the skilled person that the UAV 100 may also be launched from any suitable water surface vessel, e.g. a ship, or a sub-surface vessel e.g. a submarine. In a preferred example, the UAV 100 is configured to be launched from a platform that is also capable of carrying and launching anti-aircraft arms, such as surface-to-air or air-to-air missiles. It is desired that the UAV 100 according to the present invention will be provided with a suitable form-factor so that it can be stored/stocked and carried alongside other anti-aircraft arms, such as missiles, and launched from the same facilities and platforms that launch anti-aircraft missiles. Furthermore, a UAV 100 having a similar form factor to existing anti-aircraft missiles will provide it with a similar radar cross-section, and is thus more likely to trigger the missile approach warning system of the target aircraft 10.

Once the UAV 100 has been launched, the UAV controller 110 is configured to receive information representing the location of a target aircraft 10 and guide the UAV 100 towards the target aircraft. The target location information is obtained from at least one target tracking sensor, which may be either on-board the UAV 100 (such as active an homing radar) or off-board the UAV 100 (such as a ground-based radar station 30, or on-board another airborne platform 20), or any combination thereof.

The target tracking sensors may include, but are not limited to, active radar, semi-active radar, passive radar, thermal imaging, or visual imaging etc. In a preferred example, the UAV 100 comprises an on-board active homing radar so as to mimic the electro-magnetic emission signature of an incoming anti-aircraft missile. The active-homing radar signal may trigger the missile approach warning system on the target aircraft 10, and potentially cause the pilot to deploy (valuable and non-renewable) countermeasures, whilst simultaneously distracting the pilot and forcing the target aircraft 10 to carry out evasive manoeuvres. Carrying-out evasive manoeuvres burns fuel at an increased rate which reduces the endurance and range of operation of the target aircraft 10.

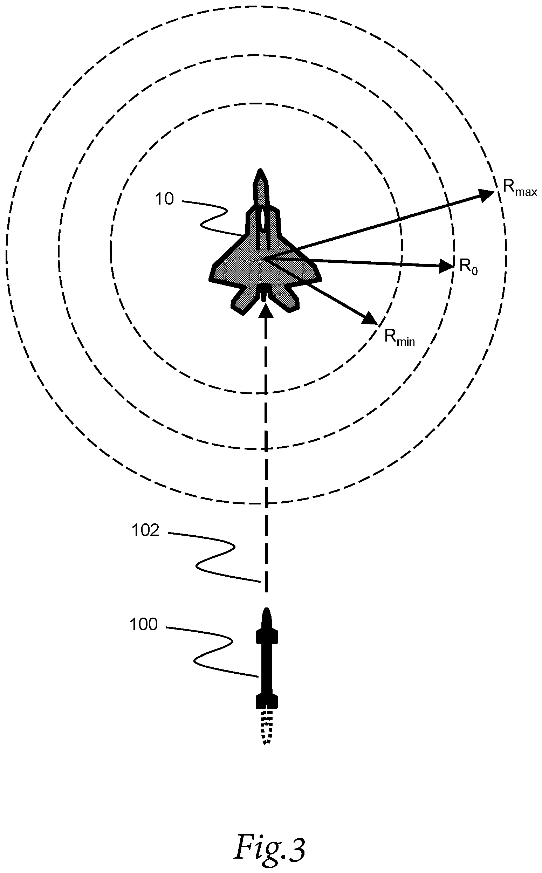

Figure 3 shows an in-flight UAV 100 pursuing a target aircraft 10 in a first ("approach") mode, closing the distance between the UAV 100 and the target aircraft 10. The controller 110 is configured to calculate a first predetermined distance R₀, a maximum predetermined distance Rₘₐₓ and a minimum predetermined distance Rₘᵢₙ surrounding the target 10. The predetermined distances R₀, Rₘₐₓ, Rₘᵢₙ are radial distances - in spherical coordinates - from the target aircraft 10. The centre of the spherical coordinates is considered the origin of the reference frame of the target aircraft 10. In one example, any of R₀, Rₘₐₓ, Rₘᵢₙ can be updated or amended over-the-air via wireless signal received by the control 110. In one example, the UAV maintains a distance within visual range of the target aircraft 10, and so the maximum predetermined distance Rₘₐₓ is approximately 4,000m. The controller 110 of the UAV 100 is adapted to avoid contact with the target aircraft 10, and the minimum predetermined distance Rₘᵢₙ is calculated accordingly. In a preferred example, the first predetermined distance R₀ is between the maximum distance Rₘₐₓ and the minimum distance Rₘᵢₙ.

The UAV 100 is launched from a range greater than R₀, and the controller 110 is configured to guide the UAV 100 towards the target 10 until reaching the first predetermined distance R₀ from the target aircraft 10. Once the UAV 100 reaches the first pre-determined distance R₀ from the target aircraft 10, the controller 110 is configured to enter a second "follow" mode, and pursue the target aircraft 10 whilst maintaining a distance from the target aircraft 10 between the maximum predetermined distance Rₘₐₓ and the minimum predetermined distance Rₘᵢₙ.

Whilst approaching the target aircraft 10, the controller 110 calculates a UAV flight path 102 towards the target aircraft 10 in order to reach the first predetermined distance R₀ as quickly as possible. In one example, where the UAV 100 is approaching from behind target aircraft 10, the calculated flight path 102 is substantially straight and directly towards the target aircraft 10. In other examples, where the UAV 100 is approaching the target aircraft 10 from the side or the front of the target aircraft 10, the calculated flight path 102 may be curved and/or otherwise not aimed directly at the target aircraft 10, so as to locate the UAV 100 behind the target aircraft 10, and travelling in substantially the same direction.

In one example, the flight path 102 may be calculated or determined off-board the UAV 100, and transited wirelessly to the controller 110. The off-board flight path 102 may be calculated by a computer flight control system, or determined and inputted directly by a human user i.e. by remote control of the UAV 100.

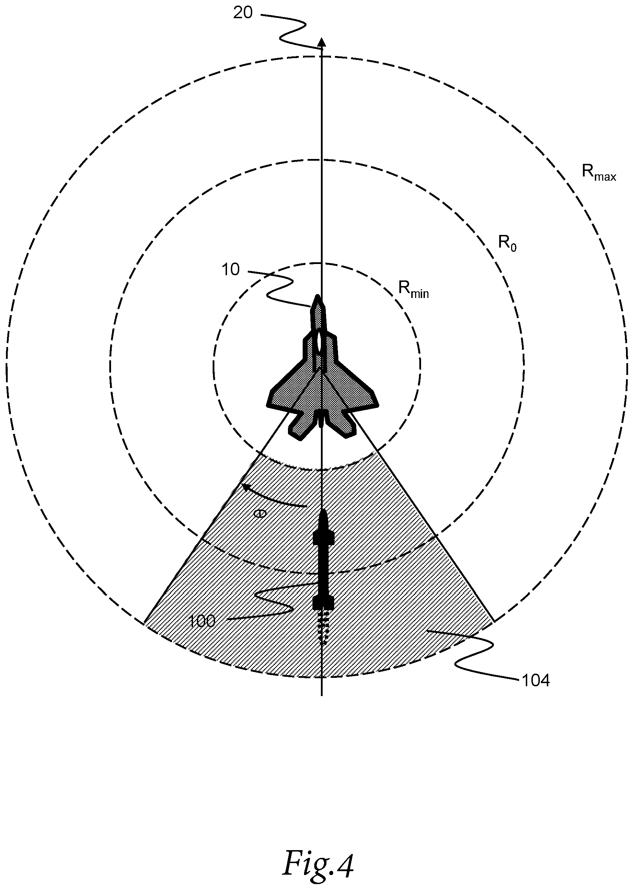

As shown in Figure 4, once the UAV 100 reaches the first predetermined distance R₀, the UAV enters a second ("follow") mode wherein the controller 110 is configured to guide the UAV 100 so as to pursue the target aircraft 10, all the while maintaining a distance between Rₘᵢₙ and Rₘₐₓ from the target aircraft 10. This is achieved by the controller 110 increasing and decreasing the speed, and steering the UAV 100 as required. The controller 110 of the UAV 100 may be configured to attempt to maintain the first predetermined distance R₀ from the target aircraft 10, or alternatively, the controller 110 is configured to oscillate (periodically, randomly or otherwise) the distance from the target aircraft 10 between maximum and minimum predetermined distances Rₘₐₓ, Rₘᵢₙ so as to increase the unpredictability and the distracting effect of the UAV 100. Whilst in the second ("follow") mode, the controller 110 steers the UAV 100 to pursue, and to avoid contact with, the target aircraft 10. Preferably the controller 110 may be configured to identify the direction of flight 20 of the target aircraft 10, and to manoeuvre the UAV 100 to follow the target aircraft 10 from behind. In particular, the UAV 100 may be configured to follow the target aircraft 10 while staying within a predetermined polar angle θ relative to the longitudinal axis of the direction of flight 20 of the target aircraft.

In one example, the controller 110 is configured to steer the UAV 100 so as to mimic the flight path 20 of the target aircraft 10 as closely as possible. Alternatively, the controller 110 may be configured to "weave" behind the target aircraft 10, adopting a seemingly random path, all the while maintaining a distance between Rₘᵢₙ and Rₘₐₓ from the target aircraft 10, and within the predetermined polar angle θ relative to the longitudinal axis of the direction of flight 20 of the target aircraft 10, i.e. in a volume defined by the surface boundaries of the maximum and minimum predetermined distances Rₘₐₓ, Rₘᵢₙ and the predetermined polar angle θ (see shaded area 104).

The UAV 100 of the present invention is configured to approach and follow a target aircraft 10 in an effort to trigger the missile approach warning system of the target aircraft 10 and to confuse the pilot into believing there is a real threat. While the UAV 100 attempts to avoid contact with the target aircraft 10, it portrays aspects similar to an anti-aircraft missile, and acts as a decoy. It is envisioned that the UAV 100 may be employed to force a target aircraft 100 to either deploy its countermeasures, thus leaving it vulnerable to anti-aircraft arms, carry-out evasive manoeuvres and burn valuable fuel, or preferably manoeuvre itself away from a protected airspace entirely. Additionally, the UAV may also be used as a training tool for pilots to simulate an incoming anti-aircraft missile.

In a preferred example, the UAV 100 is also provided with means to carry out a controlled descent. In one example, the controlled descent may be a traditional landing such as those performed by gliders or aeroplanes onto a runway or any suitable landing area. In another example, the controlled descent may be a vertical landing such as those performed by helicopters or quadcopters (or the like). In another example, the controlled descent may be performed without any powered propulsion means and/or by deploying a retardation means to controllably break the descent, such as a parachute, a deployable autorotation means or an inflatable airbag to absorb the force of impact. The UAV 100 may include landing equipment, e.g. landing gear or outriggers, to facilitate landing on a designated landing zone.

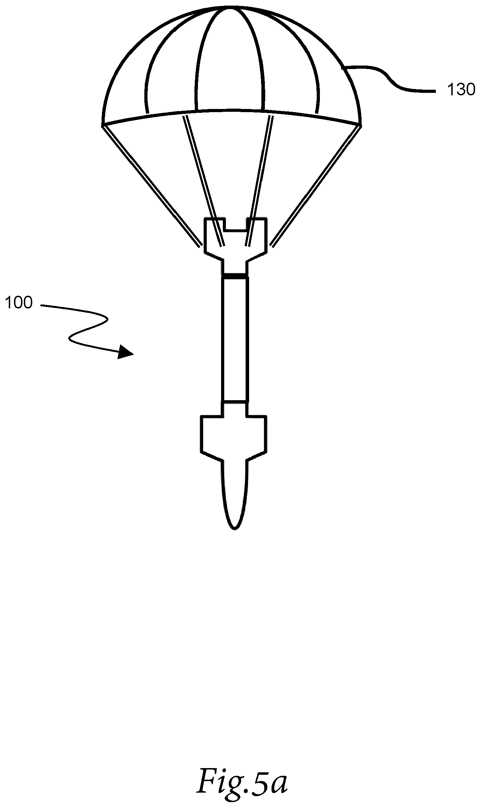

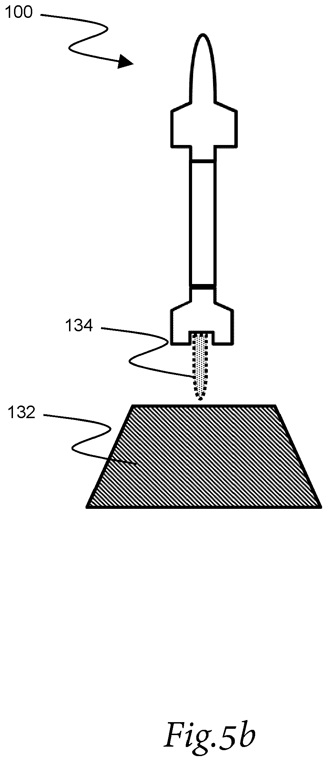

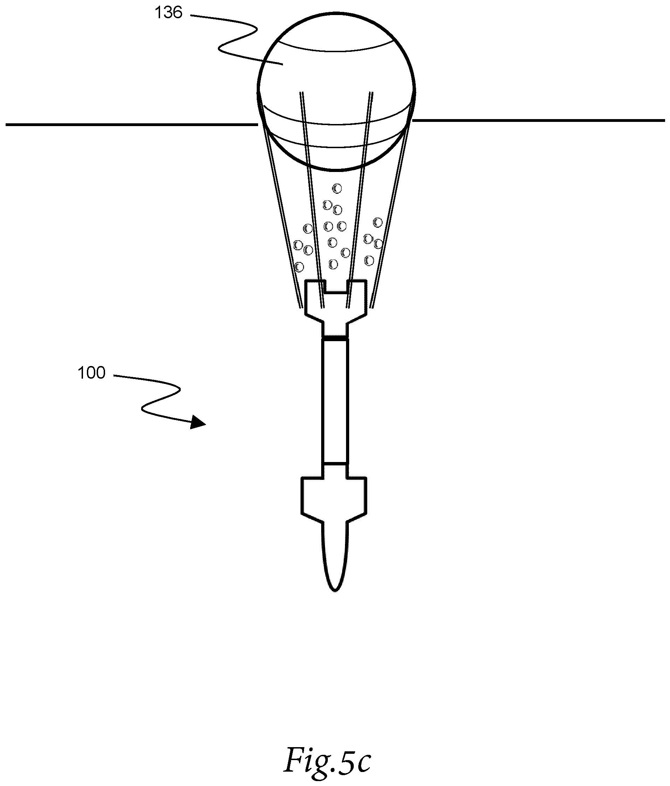

Figure 5a shows an example UAV 100 comprising a deployable parachute 130 to control the descent. Figure 5b shows an example UAV 100 comprising retro-rocket means 134 (which may comprise the main rocket propulsion means 120 and/or separate retro-rockets specifically for landing), used for controlled descent onto a designated landing zone 132. Figure 5c shows an example UAV 100 having completed a descent into water, and the UAV 100 comprises buoyancy means 136 to keep the UAV 100 afloat for recovery. The buoyancy means may be an inflatable bladder or balloon that is automatically triggered upon detection that the UAV 100 has landed in water.

The controlled descent may be initiated automatically by the controller 110, or, upon receiving a remote control signal over-the-air, wirelessly. Once initiated, the controller 110 disengages the UAV 100 from pursuit of the target aircraft 10 (e.g. cancelling the second "follow" mode) and begins a controlled descent (e.g. "landing" mode). The controlled descent may comprise steering the UAV 100 to, or at least part of the way to, a designated landing zone. The designated landing zone may be one of multiple predetermined locations stored in a memory of the controller 110, or information relating to a designated landing zone may be wirelessly communicated to the controller 110. The controller 110 may be configured to calculate the nearest designated landing zone to the UAV 100 at the point of disengaging from pursuit of the target aircraft 10. For a plurality of landing zones, the target tracking system may prioritise the landing zones according to a predetermined ranking, and calculate the available landing zone(s) according to the ranking.

The controlled descent of the UAV 100 may be triggered by a number of events, including (but not limited to): the UAV 100 exhausting (or reaching a calculated minimum level) the on-board power or fuel supply 130; the target aircraft 10 leaving a designated airspace, damage having been sustained by the UAV 100; failure of an on-board component; and/or receipt of a remote signal to disengage pursuit of the target aircraft 10.

In one example, the controller 110 is configured to calculate the current fuel or power supply 130 reserves, and the distance to the nearest designated landing zone. The controlled descent is triggered once the fuel or power supply 130 reaches a critical minimum level required in order to guide the UAV 100 back to the designated landing zone.

The landing zone may be somewhere quite remote and/or hazardous to conduct recovery operations (e.g. water landing). While in a preferred example, the landing zone is a designate landing zone, it is foreseeable that the actual location of the UAV 100 after landing may be difficult to find. This may be because of an emergency landing or the like; or it may be because the landing zone is large relative to the size of a UAV 100, making visual discovery of the UAV 100 hard. In an example of a water landing in the sea, currents and general drift may move the UAV 100 from the initial landing zone before a rescue ship can reach the landing zone. As such, in a preferred example, the UAV 100 further comprises a location transponder configured to transmit a signal upon completing the controlled descent. This will increase the likelihood of recovering the UAV 100, and thus improve its reusability and cost effectiveness.

In a preferred example, the UAV 100 is also refuelable/rechargeable and reusable such that, after landing, the UAV 100 can be refuelled/recharged and launched again, significantly lowering the cost of operating the decoy UAV 100 in comparison to the single-use nature of a traditional anti-aircraft missile. Additionally, the UAV 100 may be used as a training tool for pilots to simulate an incoming anti-aircraft missile.

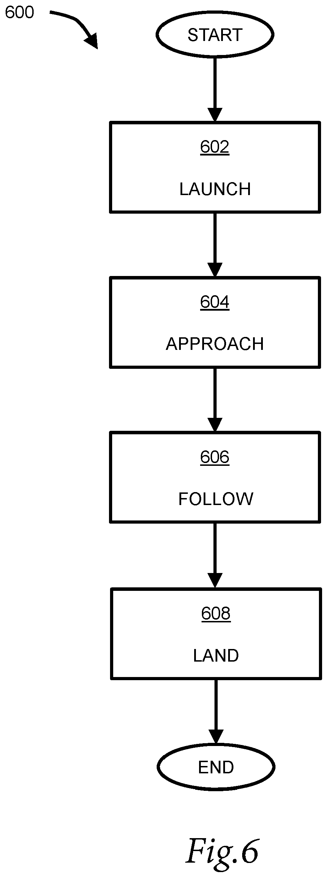

Figure 6 shows an example method 600 of launching and controlling a UAV according to the present invention. In a first step 602, a UAV is launched. As discussed previously, this may be from any suitable platform, including (but not limited to) a friendly aircraft, a static ground platform, or a mobile ground platform. In a second step 604 the UAV is controlled by an on-board controller to approach a target aircraft. In a preferred example, the controller is configured so as to steer the UAV to approach the target aircraft from behind, so that the UAV and target aircraft are travelling in substantially the same direction.

In a third step 606, upon reaching a first predetermined distance R₀ from the target aircraft, the UAV is subsequently controlled to follow the target aircraft, all the while maintaining a distance from the target aircraft between a maximum predetermined distance Rₘₐₓ and a minimum predetermined distance Rₘᵢₙ from the target aircraft.

In a preferred example, a fourth step 608 involves initiating a controlled descent of the UAV. The controlled descent may be initiated automatically by the on-board controller, or, by a signal transmitted wirelessly to the UAV.

The skilled individual will appreciate that the UAV 100 may be characterised as an autonomous UAV insofar that it can perform its task without active input by an operator. The various features described herein may be combined in any suitable combination so as to perform the present invention. Any type of unmanned aerial vehicle - both known and unknown in the state of the art - are deemed suitable for the present invention.

## Claims

1. An unmanned aerial vehicle (UAV) comprising:
a controller;
propulsion means; and
a power or fuel supply for the propulsion means,
wherein the controller is configured to:
receive location data relating to a target aircraft;
steer the UAV towards the target aircraft; and
upon reaching a first predetermined distance R₀ from the target aircraft, follow the target aircraft while maintaining a distance from the target aircraft between a maximum predetermined distance Rₘₐₓ and a minimum predetermined distance Rₘᵢₙ from the target aircraft.

2. The UAV according to claim 1 comprising a location transponder configured to transmit a signal indicating the location of the UAV.

3. The UAV according to any preceding claim, wherein the power or fuel supply is refillable/rechargeable.

4. The UAV according to any preceding claim, wherein the controller is configured to:
identify a direction of flight of the target aircraft;
calculate a flight path for the UAV so as to approach and follow the target aircraft from behind; and,
control the UAV to fly along the calculated flight path.

5. The UAV according to any preceding claim wherein the controller is configured to steer the UAV so as to maintain a predetermined polar angle relative to the longitudinal axis of the direction of flight of the target aircraft.

6. The UAV according to any preceding claim wherein the location data is received from at least one on-board tracking sensor.

7. The UAV according to any preceding claim wherein the location data is received from at least one off-board tracking sensor.

8. The UAV according to any of claims 6 or 7 wherein the at least one tracking sensor is one of:
active radar;
semi-active radar;
passive radar;
thermal imaging; and
visual imaging .

9. The UAV according to any preceding claim, comprising controlled descent means, comprising at least one of:
a landing gear arrangement;
a parachute;
a retro-rocket;
an autorotation means;
buoyancy means; and,
an inflatable airbag.

10. The UAV according to claim 9 wherein the controller is adapted to:
calculate the remaining range of the UAV;
calculate the distance to the nearest designated landing zone; and
initiate a controlled descent towards the nearest designated landing zone once the range of the UAV falls to the distance to the nearest designated landing zone.

11. The UAV according to claim 9 wherein the controller is adapted to initiate a controlled descent upon receiving a wireless signal.

12. The UAV according to any preceding claim, wherein the propulsion means is a rocket or jet engine.

13. A method of launching and controlling an unmanned aerial vehicle (UAV), the method comprising:
launching a UAV;
controlling the UAV to approach a target aircraft; and,
controlling the UAV to follow the target aircraft upon reaching a first predetermined distance R₀ from the target aircraft, while maintaining a distance from the target aircraft between a maximum predetermined distance Rₘₐₓ and a minimum predetermined distance Rₘᵢₙ from the target aircraft.

14. A method according to claims 11 further comprising initiating a controlled descent of the UAV.
